Europäisches Patentamt

European Patent Office

Office européen des brevets

(11) Publication number: **0 137 402**
**B1**

## (12) EUROPEAN PATENT SPECIFICATION

(45) Date of publication of patent specification: **11.01.89**

(21) Application number: **84111435.8**

(22) Date of filing: **25.09.84**

(51) Int. Cl.⁴: **F 21 S 5/00,** G 02 B 6/26,
F 21 S 11/00

(54) **Light diverting device.**

(30) Priority: **27.09.83 JP 178718/83**
**16.11.83 JP 215809/83**

(43) Date of publication of application:
**17.04.85 Bulletin 85/16**

(45) Publication of the grant of the patent:
**11.01.89 Bulletin 89/02**

(84) Designated Contracting States:
**CH DE FR GB IT LI NL SE**

(56) References cited:
**DE-A-2 427 182**
**DE-A-2 614 051**
**GB-A-2 059 621**

(73) Proprietor: **Mori, Kei·**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The invention is directed to a light diverting device with a first cylindrical optical conductor having a longitudinal axis and being provided with a light emission end surface, with a second cylindrical optical conductor having a second longitudinal axis axially aligned with said first longitudinal axis and being provided with a light receiving end surface, and with a space being provided between said light emission surface and said light receiving surface for coupling out a part of the light transmitted through said first and second conductors, said part being coupled out in a direction traverse to said longitudinal axis.

A light diverting device of this type is known from "Bauelemente der Optik, Carl Hauser Verlag, München/Wien 30.03.1983". According to this prior art, the hole provided between the light emission surface and the light receiving surface is in the form of a ring so that only a fixed amount of light can be coupled out at the interface surface between the light emission surface and the light receiving surface.

It is the object of the present invention to provide a light diverting device of the type mentioned above in which the amount of light to be coupled out can be easily adjusted and changed.

To solve this task, the light diverting device of the type above is characterized by a third optical conductor being arranged traverse to the longitudinal axis of the first and second conductors to receive the part of light coupled out and by a transverse bore forming said space and comprising a fourth optical conductor, at least a part of said fourth optical conductor being provided to change the open space in said bore and thereby changing the amount of light energy diverted into said third optical conductor.

Preferred embodiments of the invention are disclosed in the depending claims.

The invention will now be described with reference to the embodiments depicted in the drawings.

Fig. 1 is a cross-sectional view of the light diverting device according to an embodiment of the present invention.

Fig. 2 is a side view of Fig. 1 as seen from the direction of arrow II.

Figs. 3 through 7 are views showing light diverting members used in the embodiments of the present invention respectively.

Fig. 8 is a cross-sectional view taken through a light conducting rod.

Fig. 9 is a view showing an example of an optical conductor for use in the light diverting device shown in Fig. 8.

Fig. 10 is a cross-sectional view showing an application of the light diverting device according to the present invention.

Fig. 11 is a side view showing another embodiment of the present invention.

Figs. 12 and 13 are views showing examples of preferred optical conductors for use in light diverting devices of the type of embodiment shown in Fig. 11.

Description of the preferred embodiments

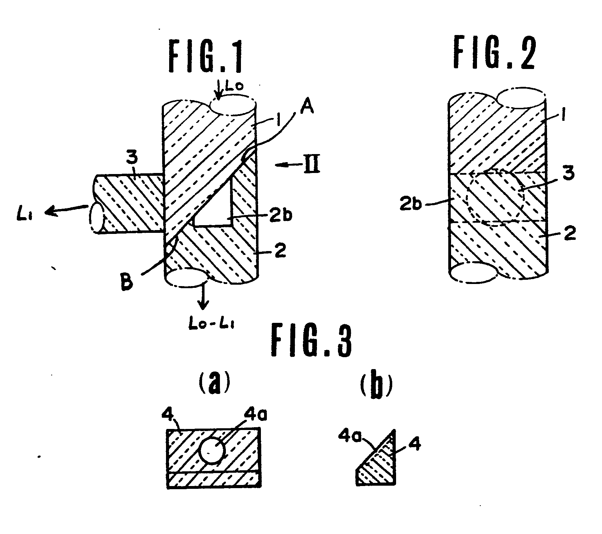

Fig. 1 is a cross-sectional view of the construction for explaining an embodiment of a light diverting device according to the present invention. In Fig. 1, 1 is a first cylindrical optical conductor, 2 is a second cylindrical optical conductor, and 3 is a third cylindrical optical conductor.

The light emitting end surface A of the first optical conductor 1 is formed on an inclined plane and the light receiving end surface B of the second optical conductor 2 has an inclined surface engaged with the edge surface of A and it further has a circular groove 2b at the central portion thereof. The third optical conductor 3 is so installed that the light receiving end is situated on the outer circumferential surface of the first optical conductor 1 at a position opposed to the groove 6.

Consequently, a part $L_1$ of the light energies $L_0$, transmitted through the optical conductor 1, is reflected on a reflecting surface corresponding to the groove surface portion of the optical conductor 1 and diverted into the third optical conductor 3 while the remaining light energy $L_0 - L_1$ is transmitted through the second optical conductor 2.

Since the amount (intensity) of the diverted light is related to the square measure of groove 2b, that of groove 2b may be allowed to be changed in accordance with the diverted light intensity to be required. For instance, when one fourth ($\frac{1}{4}$) of the light energy $L_0$ transmitted through the first optical conductor 1 needs to be diverted and taken out therefrom, the square measure of the groove 2b may be allowed to be one fourth ($\frac{1}{4}$) of the first optical conductor's square measure.

Fig's. 3(a) and 3(b) are views showing an example of the fourth optical conductor 4. Fig. 3(a) is a front view thereof and Fig. 3(b) is a side view thereof. In the embodiment shown in Fig. 3, a circular hole 4a is provided at an approximate central portion on the inclined surface side of the fourth optical conductor 4.

Consequently if the fourth optical conductor 4 is installed in the groove 2b, a part of the light energy transmitted through the first optical conductor 1 is reflected on the hole portion 4a and guided into the third optical conductor 3 as is the case in the embodiment previously mentioned. In such a case, the square measure of the groove 4a may be changed in order to change the amount of diverted light. Therefore, for example, a plurality of fourth optical conductors having grooves 4a of different square measures are provided, and one optical conductor having a groove of a desired square measure can be selected from among them and employed in the light diverting device.

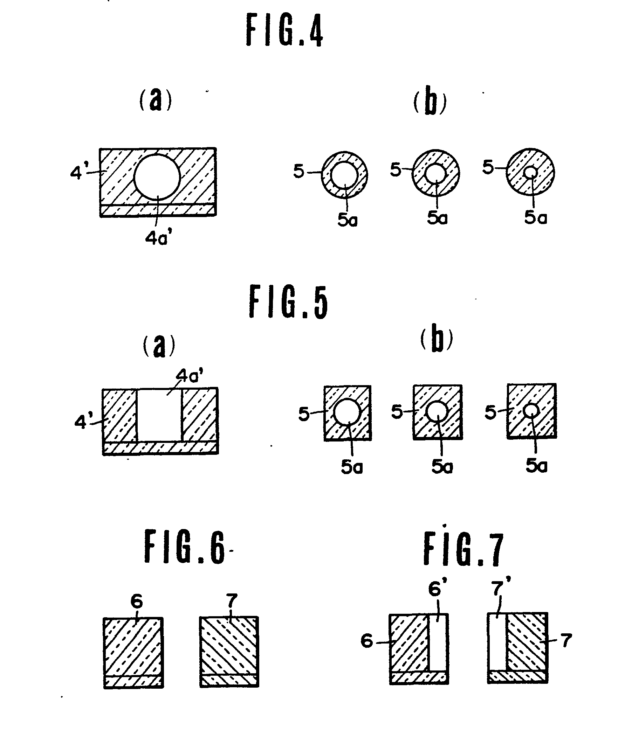

Otherwise, a fourth optical conductor body 4' having a comparatively large opening 4a' as shown in Fig. 4(a) is provided, and in addition to that, a plurality of exchange elements 5 having a hole 5a bored therein as shown in Fig. 4(b) is provided, the outer circumferential surfaces of which are engaged with the groove 4a' of the above-mentioned conductor body 4' respectively. The square measures of the respective holes 5a bored in the respective elements 5 are different from each other. An element having a hole 5a corresponding to a desired amount of the diverted light may be selected among those elements 5 and inserted in the opening 4a' of the conductor body 4', and afterward the conductor body 4' may be installed in the afore-mentioned groove 2b.

Furthermore, in the case of employing an element as previously described, the shape of the opening 4a' of the conductor body 4' as mentioned above may be optional, as for example a four-cornered (square) one. On that occasion, the external form of the element 5 may be, for example a four-cornered one so as to fit into the openings form for the conductor body 4'.

Figs. 5(a) and 5(b) are views showing an example of such a case, Fig. 5(a) is a front view of the above-mentioned conductor body 4'. As shown in Fig. 5(a), for instance, a four-cornered opening 4a' is provided therein. In the opening 4a', there is provided the fifth optical conductor 5 as shown in Fig. 5(b). The external form of the conductor element 5 coincides with the opening 4a' of the conductor body, and the element 5 has a circular hole 5a in its internal portion.

Fig. 6 is a view showing another embodiment of the present invention. This embodiment includes two optical conductor parts 6 and 7 installed in a series in groove 2b as shown in Figs. 1 and 2.

Consequently, when both of the optical conductor parts 6 and 7 are inserted so as to be in contact with each other, all of the light energy from the first optical conductor is transmitted to the second optical conductor 2. If a gap-space forming the hole, is provided between the parts, a certain amount of light energy corresponding to the square measure of the gap-space (hole) is guided into the third optical conductor 3.

Fig. 7 is a front view showing a modification of the embodiment shown in Fig. 6. In this modified embodiment, notches 6' and 7' are provided on the inclined surfaces of the conductor part 6 and 7. In such a manner, the optical element 5 as shown in Fig. 5(b) is installed and used between both notches 6' and 7'.

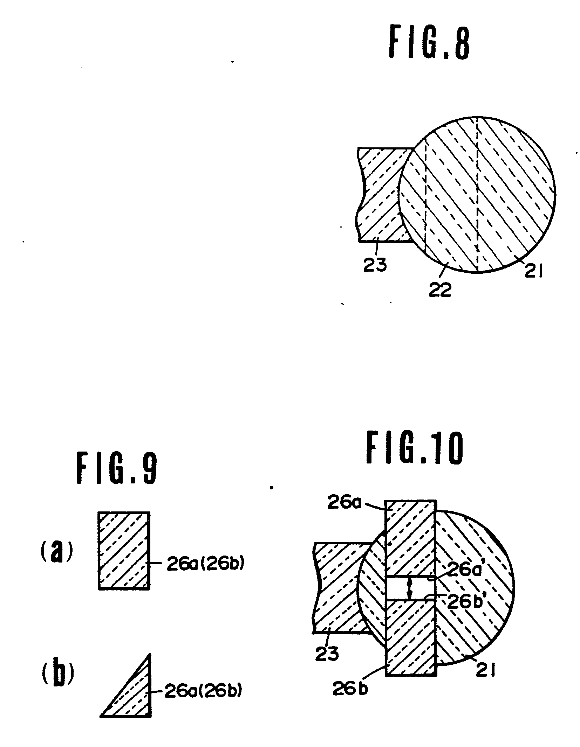

In Fig. 8, 21 is an optical conductor rod and a through hole 22 is bored into the optical conductor rod 21 in the direction of the radius thereof.

Figs. 9(a) and 9(b) show an example of how an optical conductor is tightly inserted into through hole 22. In those figures, (a) is a plane view and (b) is a side view of the inserted optical conductor. In practice, at least two of such optical conductors 26 are prepared, and those optical conductors are inserted into the through hole 22 from both sides thereof as shown by numbers 26a and 26b in Fig. 15.

On that occasion, however, when those optical conductors 26a and 26b are inserted into the hole 22 so as to let the inserted facing (edge) surfaces 26a' and 26b' of the optical conductors coincide with each other, all of the lights transmitted in the direction shown by arrow A through the optical conductor rod 21 are transmitted in the direction shown by arrow B. When a gap space l, forming a hole, is provided between both of the facing surfaces of 26a' and 26b', a part of the light transmitted from direction A is reflected at the place (surface) corresponding to the gap-space, and it is transmitted in the direction as shown by arrow C through the optical conductor rod 23 and then taken out therefrom.

Furthermore, the amount of the light taken out from the optical conductor rod 23 can be adjusted by changing the gap l, that is, of the inserted portions of the optical conductors 26a and 26b. Still further, on that occasion, if the air contained in the gap-space of the gap l does'nt come out into the open air, it may be impossible to bring the edge surfaces, 26a' and 26b', of the optical conductors 26a and 26b into close contact with each other. In order to avoid such a problem, a fine hole is preferably opened in the direction of their axes, in either one of the optical conductors 6a and 26b or in both of them.

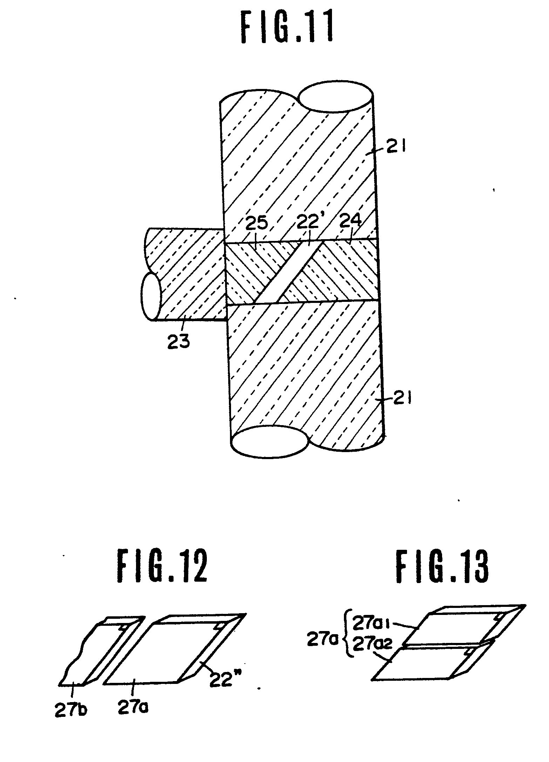

Fig. 11 is a front view for explaining another embodiment of the light diverting device according to the present invention. In Fig. 11, a through hole 22 is formed in the shape of a parallelogram as shown in Fig. 11 and inside the hole 22' fourth optical conductor parts 27a and 27b are provided having parallelogram surfaces 22'' that match the inner surface of the hole 22' as shown in Fig. 12. Those optical conductor parts 27a and 27b can be removably inserted into the hole 22' in the same manner as in the case of optical conductor parts 26a and 26b.

In the afore-mentioned embodiment, only one employing a couple of optical conductor parts 26a and 26b, or 27a and 27b, is described. However, it may be possible to further divide optical conductor parts 26a and 26b, or 27a and 27b, into several sections as shown in Fig. 13. Optical conductor part 27b is omitted in Fig. 13 because it is completely of the same construction as optical conductor part 27a. The optical conductor parts divided in the same manner are represented by $27a_1$ and $27a_2$, respectively. Both of them can be employed for obtaining the same performance as that of the afore-mentioned single optical conductor part 27a.

## Claims

1. Light diverting device with a first cylindrical optical conductor (1) having a first longitudinal axis and being provided with a light emission end surface (A), with a second cylindrical optical conductor (2) having a second longitudinal axis, axially aligned with said first longitudinal axis and being provided with a light receiving end surface (B) and with a space (2b, 4a, 5a, 22') being provided between said light emission surface and said light receiving surface for coupling out a part of the light transmitted through said first and second conductors, said part being coupled out in a direction transverse to said longitudinal axis, characterized by a third optical conductor (3, 23) being arranged transverse to the longitudinal axis of the first and second conductors to receive the part of light diverted out and by a transverse bore forming said space and comprising a fourth optical conductor (4; 24, 25; 27a, 27b; 26a, 26b), at least a part of said fourth optical conductor being provided to change the open space in said bore and thereby to change the amount of light energy diverted into said third optical conductor.

2. Light diverting device in accordance with claim 1 characterized by said light receiving end surface (B) and said light emitting end surface (A) being inclined to the longitudinal axis with the same inclination angle and that the bore is a groove (2b) being opened to said inclined light receiving surface, said groove being constructed to removably hold said fourth conductor.

3. Light diverting device in accordance with claim 2 characterized by said fourth conductor comprising a conductor body (4'), an opening (4a') being provided in said body, said opening being coaxially aligned with said longitudinal axis and exchange elements (5) are provided to be alternatively received in said opening, each element defining a hole (5a) with a certain square measure.

4. Light diverting device in accordance with claim 3 characterized by said conductor body (4') comprising a surface forming a part of said inclined light receiving surface, said opening (4a') being a cylindrical hole having its axis perpendicular to said inclined light receiving surface.

5. Light diverting device in accordance with claim 4 characterized by each of said exchange elements (4, 5) having a surface forming a part of said inclined light receiving surface and said hole in each of said exchange elements having its axis perpendicular to said inclined surface.

6. Light diverting device in accordance with claim 3 characterized in that said opening (4a') has a circular cross-section.

7. Light diverting device in accordance with claim 3 characterized in that said opening has a rectangular cross-section.

8. Light diverting device in accordance with claim 1 characterized by said fourth conductor being comprised of two conductor parts (6, 7), said parts being inserted in said groove (2b) and being movable with respect to each other to define said open space.

9. Light diverting device in accordance with claim 3 characterized by each of said two conductor parts (6, 7) having notches (6', 7'), said notches forming a base for arranging the optical conductor element (5).

10. Light diverting device in accordance with claim 1 characterized by an optical conductor rod (21) provided with a through-hole (22), the part on the light receiving side of the through-hole (22) forming the first optical conductor and said part of the light emitting side of said through-hole forming the second optical conductor, the fourth conductor being comprised of at least two parts (26a, 26b), said parts being movable in said through-hole (22) with respect to each other to define said open space (22').

11. Light diverting device in accordance with claim 10 characterized in that said through-hole is formed in the shape of a parallelogram and in that fourth conductors (27a, 27b) are provided with parallelogram surfaces to match the inner surface of the hole.

**Patentansprüche**

1. Lichtablenkeinrichtung mit einem ersten zylindrischen optischen Leiter (1), der eine erste Längsachse aufweist und mit einer lichtabgebenden Stirnfläche (A) versehen ist, mit einem zweiten zylindrischen optischen Leiter (2), der eine zweite Längsachse aufweist, axial auf die genannte erste Längsachse ausgerichtet und mit einer Lichtaufnehmenden Stirnfläche (B) versehen, und mit einem zwischen der genannten lichtabgebenden Fläche und der genannten lichtaufnehmenden Fläche vorgesehenen Raum (2b, 4a, 5a, 22') zum Herausführen eines Teils des durch den genannten ersten und den genannten zweiten Leiter übertragenen Lichtes, wobei der genannte Teil in einer Richtung quer zur genannten Längsachse herausgeführt wird, gekennzeichnet durch einen quer zur Längsachse des ersten und zweiten Leiters angeordneten dritten optischen Leiter (3, 23) zum Aufnehmen des nach außen abgelenkten Teils des Lichtes und durch eine Querbohrung, die den genannten Raum bildet und einen vierten optischen Leiter (4; 24, 25; 27a, 27b; 26a, 26b,) enthält, wobei wenigstens ein Teil des genannten vierten optischen Leiters dazu vorgesehen ist, den freien Raum in der genannten Bohrung zu verändern und damit die in den genannten dritten optischen Leiter hinein abgelenkte Lichtenergiemenge zu variieren.

2. Lichtablenkeinrichtung nach Anspruch 1, dadurch gekennzeichnet, daß die genannte lichtaufnehmende Stirnfläche (B) und die genannte lichtabgebende Stirnfläche (A) mit dem gleichen Neigungswinkel gegenüber der Längsachse schräggestellt sind, und daß die Bohrung eine Rinne (2b) ist, welche zur genannten schräggestellten lichtaufnehmenden Fläche hin offen ist, wobei die genannte Rinne ausgebildet ist, den genannten vierten Leiter entfernbar zu halten.

3. Lichtablenkeinrichtung nach Anspruch 2, dadurch gekennzeichnet, daß der genannte vierte Leiter einen Leiterkörper (4') und eine in dem genannten Körper vorgesehene Öffnung (4a') umfaßt, wobei die genannte Öffnung koaxial mit der genannten Längsachse ausgerichtet ist, und Austauschelemente vorgesehen sind, um abwechselnd in der genannten Öffnung aufgenommen zu werden, und wobei jedes Element ein Loch (5a) mit einem bestimmten Flächenmaß abgrenzt.

4. Lichtablenkeinrichtung nach Anspruch 3, dadurch gekennzeichnet, daß der genannte Leiterkörper (4') eine Fläche aufweist, die einen Teil der genannten schräggestellten lichtaufnehmenden Fläche bildet, wobei die genannte Öffnung (4a') ein zylindrisches Loch ist, dessen Achse senkrecht zur genannten schräggestellten lichtaufnehmenden Fläche verläuft.

5. Lichtablenkeinrichtung nach Anspruch 4, dadurch gekennzeichnet, daß jedes der genannten Austauschelemente (4, 5) eine Fläche aufweist, die einen Teil der genannten schräggestellten lichtaufnehmenden Fläche bildet und das genannte Loch in jedem der genannten Austauschelemente mit seiner Achse senkrecht zur genannten schräggestellten Fläche verläuft.

6. Lichtablenkeinrichtung nach Anspruch 3, dadurch gekennzeichnet, daß die genannte Öffnung (4a') einen kreisrunden Querschnitt aufweist.

7. Lichtablenkeinrichtung nach Anspruch 3, dadurch gekennzeichnet, daß die genannte Öffnung einen rechteckigen Querschnitt aufweist.

8. Lichtablenkeinrichtung nach Anspruch 1, dadurch gekennzeichnet, daß der genannte vierte Leiter zwei Leiterteile (6, 7) umfaßt, wobei die genannten Teile in die genannte Rinne (2b) eingesetzt und bezüglich zueinander bewegbar sind, um den genannten freien Raum zu bestimmen.

9. Lichtablenkeinrichtung nach Anspruch 3, dadurch gekennzeichnet, daß jeder der genannten zwei Leiterteile (6, 7) Aussparungen (6', 7') aufweist, wobei die genannten Aussparungen einen Ausgangspunkt zum Anordnen des optischen Leiterelementes (5) bilden.

10. Lichtablenkeinrichtung nach Anspruch 1, gekennzeichnet durch einen optischen Leiterstab (21), der mit einer Durchgangsöffnung (22) versehen ist, wobei der Teil auf der lichtaufnehmenden Seite der Durchgangsöffnung (22) den ersten optischen Leiter bildet und der genannte Teil der lichtabgebenden Seite der genannten Durchgangsöffnung den zweiten optischen Leiter bildet, wobei der vierte Leiter wenigstens zwei Teile (26a, 26b) umfaßt, welche genannten Teile bezüglich zueinander in der genannten Durchgangsöffnung (22) bewegbar sind, um den genannten freien Raum (22') zu bestimmen.

11. Lichtablenkeinrichtung nach Anspruch 10, dadurch gekennzeichnet, daß die genannte Durchgangsöffnung in Form eines Parallelogramms ausgebildet ist, und daß vierte Leiter (27a, 27b) mit Parallelogrammflächen vorgesehen sind, um den Innenflächen der Öffnung zu entsprechen.

**Revendications**

1. Dispositif de dérivation de lumière comportant un premier conducteur optique cylindrique (1) ayant un premier axe longitudinal et pourvu d'une surface extrême d'émission de lumière (A), un second conducteur optique (2) ayant un second axe longitudinal, aligné axialement avec ledit premier axe longitudinal et pourvu d'une surface extrême de réception de lumière (B), ainsi qu'un espace (2b, 4a, 5a, 22') qui est situé entre ladite surface d'émission de lumière et ladite surface de réception de lumière pour dériver une partie de la lumière transmise par l'intermédiaire desdits premier et second conducteurs, ladite partie étant dérivée dans une direction transversale audit axe longitudinal, caractérisé par un troisième conducteur optique (3, 23), qui est disposé transversalement à l'axe longitudinal des premier et second conducteurs de façon à recevoir la partie de lumière dérivée et par un trou transversal formant ledit espace et comprenant un quatrième conducteur optique (4; 24, 25; 27a, 27b; 26a, 26b), au moins une partie dudit quatrième conducteur optique étant agencée de manière à modifier l'espace ouvert dans ledit trou et à changer ainsi la quantité d'énergie lumineuse dérivée dans ledit troisième conducteur optique.

2. Dispositif de dérivation de lumière selon la revendication 1, caractérisé en ce que ladite surface extrême de réception de lumière (B) et ladite surface extrême d'émission de lumière (A) sont inclinées par rapport à l'axe longitudinal du même angle d'inclinaison et en ce que le trou est une rainure (2b) qui est ouverte en direction de ladite surface inclinée de réception de lumière, ladite rainure étant agencée de manière à maintenir de façon amovible ledit quatrième conducteur.

3. Dispositif de dérivation de lumière selon la revendication 2, caractérisé en ce que ledit quatrième conducteur comprend un corps conducteur (4'), une ouverture (4a') ménagée dans ledit corps, ladite ouverture étant alignée coaxialement avec ledit axe longitudinal et en ce qu'il est prévu des éléments d'échange (5) destinés à être reçus alternativement dans ladite ouverture, chaque élément définissant un trou (5a) ayant une section définie.

4. Dispositif de dérivation de lumière selon la revendication 3, caractérisé en ce que ledit corps conducteur (4') comprend une surface formant une partie de ladite surface inclinée de réception de lumière, ladite ouverture (4a') étant un trou cylindrique dont l'axe est perpendiculaire à ladite surface inclinée de réception de lumière.

5. Dispositif de dérivation de lumière selon la revendication 4, caractérisé en ce que chacun desdits éléments d'échange (4, 5) comporte une surface formant une partie de ladite surface inclinée de réception de lumière et ledit trou ménagé dans chacun desdits éléments d'échange a son axe perpendiculaire à ladite surface inclinée.

6. Dispositif de dérivation de lumière selon la revendication 3, caractérisé en ce que ladite ouverture (4a') a une section droite circulaire.

7. Dispositif de dérivation de lumière selon la revendication 3, caractérisé en ce que ladite ouverture a une section droite rectangulaire.

8. Dispositif de dérivation de lumière selon la revendication 1, caractérisé en ce que ledit quatrième conducteur est composé de deux parties de conducteur (6, 7), lesdites parties étant insérées dans ladite rainure (2b) et étant mobiles l'une par rapport à l'autre pour définir ledit espace ouvert.

9. Dispositif de dérivation de lumière selon la revendication 3, caractérisé en ce que chacune des deux parties de conducteur précitées (6, 7) comporte des encoches (6', 7'), lesdites encoches formant une base pour disposer l'élément conducteur optique (5).

10. Dispositif de dérivation de lumière selon la revendication 1, caractérisé en ce qu'une tige formant conducteur optique (21) est pourvue d'un trou de traversée (22), la partie de ce trou de traversée (22) qui est située du côté de réception de la lumière formant le premier conducteur optique tandis que la partie dudit trou de traversée qui est située du côté d'émission de lumière forme le second conducteur optique, le quatrième conducteur étant composé d'au moins deux parties (26a, 26b), lesdites parties étant mobiles dans ledit trou de traversée (22) l'une par rapport à l'autre de façon à définir ledit espace ouvert (22').

11. Dispositif de dérivation de lumière selon la revendication 10, caractérisé en ce que ledit trou de traversée est réalisé avec une forme de parallélogramme et en ce que des quatrièmes conducteurs (27a, 27b) sont pourvus de surfaces en parallélogramme en adaptation à la surface intérieure des trous.

# FIG.1

# FIG.2

# FIG.3

## (a)

## (b)

# FIG.4

## (a)

4' — 4a'

## (b)

5 — 5a    5 — 5a    5 — 5a

# FIG.5

## (a)

4a'

4' —

## (b)

5 — 5a    5 — 5a    5 — 5a

# FIG.6

6    7

# FIG.7

6'    7'

6 —    — 7

# FIG.8

23  22  21

# FIG.9

(a)    26a(26b)

(b)    26a(26b)

# FIG.10

26a    26a    26b    23    26b    21

# FIG.11

# FIG.12

# FIG.13